# EUROPEAN PATENT APPLICATION

(11) **EP 3 470 651 A1**
(43) Date of publication of application: **17.04.2019**
(21) Application number: 18199289.2
(22) Date of filing: 09.10.2018
(51) Int. Cl.: F02C 6/08, F02C 7/141, F02C 9/18, F23M 5/08, F23R 3/00

(54) **COOLED COMBUSTOR CONFIGURATION**

(30) Priority: 10.10.2017 US 201715729148
(71) Applicant: United Technologies Corporation, Farmington, CT 06032 (US)
(72) Inventor: ZACCHERA, Kevin, Glastonbury, CT 06033 (US); LEMOINE, Jonathan, Vernon, CT 06066 (US)
(74) Representative: Dehns

(57) **Abstract**

A combustor cooling system (200) for a combustor (300) of a gas turbine engine (20) is provided. The combustor cooling system comprising: a heat exchanger (220) fluidly connected to a compressor section (24) of the gas turbine engine, the heat exchanger being configured to receive compressor bleed air (210a) from the compressor section and cool the compressor bleed air; and a plenum assembly (250) fluidly connected to the heat exchanger, the plenum assembly configured to receive cooled compressor bleed air (210b) from the heat exchanger and distribute the cooled compressor bleed air to one or more areas of the combustor.

## Description

### BACKGROUND

The subject matter disclosed herein generally relates to combustors in gas turbine engines and, more particularly, to cooling of combustors of gas turbine engines.

A combustor of a gas turbine engine may be configured and required to burn fuel in a minimum volume. Such configurations may place substantial heat load on the structure of the combustor (e.g., panels, shell, etc.). Such heat loads may dictate that special consideration is given to structures which may be configured as heat shields or panels configured to protect the walls of the combustor. Even with such configurations, excess temperatures at various locations may occur leading to oxidation, cracking, and high thermal stresses of the heat shields or panels.

### SUMMARY

According to one embodiment, a combustor cooling system for a combustor of a gas turbine engine is provided. The combustor cooling system comprising: a heat exchanger fluidly connected to a compressor section of the gas turbine engine, the heat exchanger being configured to receive compressor bleed air from the compressor section and cool the compressor bleed air; and a plenum assembly fluidly connected to the heat exchanger, the plenum assembly configured to receive cooled compressor bleed air from the heat exchanger and distribute the cooled compressor bleed air to one or more areas of the combustor.

In further embodiments, the plenum assembly may be fluidly connected to the heat exchanger through a valve configured to adjust the flow of cooled compressor bleed air from the heat exchanger to the combustor.

The plenum assembly may further comprise at least one of a frontal plenum to provide cooled compressor bleed air to an inlet of the combustor, an inner plenum to provide cooled compressor bleed air to a radially inward area of the combustor, an outer plenum to provide cooled compressor bleed air to a radially outward area of the combustor, and a bypass plenum to provide cooled compressor air to an engine component located downstream of the combustor.

The plenum assembly may further comprise a frontal plenum to provide cooled compressor bleed air to an inlet of the combustor, an inner plenum to provide cooled compressor bleed air to a radially inward area of the combustor, an outer plenum to provide cooled compressor bleed air to a radially outward area of the combustor, and a bypass plenum to provide cooled compressor air to an engine component located downstream of the combustor.

The plenum assembly may further comprise a frontal plenum to provide cooled compressor bleed air to an inlet of the combustor.

The plenum assembly may further comprise an inner plenum to provide cooled compressor bleed air to a radially inward area of the combustor and an outer plenum to provide cooled compressor bleed air to a radially outward area of the combustor.

The plenum assembly may further comprise an inner plenum to provide cooled compressor bleed air to a radially inward area of the combustor.

The plenum assembly may further comprise an outer plenum to provide cooled compressor bleed air to a radially outward area of the combustor.

The plenum assembly may further comprise a bypass plenum to provide cooled compressor air to an engine component downstream of the combustor.

The plenum assembly may further comprise an inner plenum to provide cooled compressor bleed air to a radially inward area of the combustor.

The plenum assembly may further comprise an outer plenum to provide cooled compressor bleed air to a radially outward area of the combustor.

The plenum assembly may be fluidly connected to one or more engine components located downstream of the combustor and the plenum assembly may be configured to provide the cooled compressor bleed air to one or more engine components.

The plenum assembly may further comprise an inner plenum to provide cooled compressor bleed air to a radially inward area of the combustor, wherein the inner plenum assembly provides cooled compressor bleed air to an inner vane of a turbine section of the gas turbine engine.

The plenum assembly may further comprise an outer plenum to provide cooled compressor bleed air to a radially outward area of the combustor, wherein the outer plenum assembly provides cooled compressor bleed air to an outer vane of a turbine section of the gas turbine engine or a blade outer air seal of the turbine section of the gas turbine engine.

The plenum assembly may further comprise a bypass plenum to provide cooled compressor bleed air to a blade of a turbine section of the gas turbine engine.

According to another embodiment, a method of cooling a combustor of a gas turbine engine is provided. The method comprising: extracting compressor bleed air from a compressor section of the gas turbine engine; cooling compressor bleed air using a heat exchanger fluidly connected to the compressor section; and distributing cooled compressor bleed air to one or more areas of the combustor using a plenum assembly.

Further embodiments may include adjusting flow of cooled compressor bleed air from the heat exchanger to the combustor using a valve.

Further embodiments may include detecting a temperature of the combustor; determining a cooling requirement for the combustor in response to the temperature of the combustor; and adjusting flow of cooled compressor bleed air from the heat exchanger to the combustor using a valve.

In further embodiments, the one or more areas may comprise at least one of an inlet of the combustor, a radially inward area of the combustor, and a radially outward area of the combustor.

Further embodiments may include distributing cooled compressor bleed air to one or more engine components located downstream of the combustor.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 is a partial cross-sectional illustration of a gas turbine engine, in accordance with an embodiment of the disclosure;
FIG. 2 is a cross-sectional illustration of a combustor cooling system, in accordance with an embodiment of the disclosure;
FIG. 3 is a cross-sectional illustration of a combustor cooling system, in accordance with an embodiment of the disclosure;
FIG. 4 is a cross-sectional illustration of a combustor cooling system, in accordance with an embodiment of the disclosure;
FIG. 5 is a cross-sectional illustration of a combustor cooling system, in accordance with an embodiment of the disclosure;
FIG. 6 is a cross-sectional illustration of a combustor cooling system, in accordance with an embodiment of the disclosure; and
FIG. 7 is a flow chart illustrating a method of cooling a combustor of a gas turbine engine, in accordance with an embodiment of the disclosure.

The detailed description explains embodiments of the present disclosure, together with advantages and features, by way of example with reference to the drawings.

### DETAILED DESCRIPTION

A detailed description of one or more embodiments of the disclosed apparatus and method are presented herein by way of exemplification and not limitation with reference to the Figures.

Combustors of gas turbine engines experience elevated heat levels during operation. Impingement and convective cooling of panels of the combustor wall may be used to help cool the combustor. Convective cooling may be achieved by air that is trapped between the panels and a shell of the combustor. Impingement cooling may be a process of directing relatively cool air from a location exterior to the combustor toward a back or underside of the panels.

Thus, combustor liners and heat shields are utilized to face the hot products of combustion within a combustion chamber and protect the overall combustor shell. The combustor liners may be supplied with cooling air including dilution passages which deliver a high volume of cooling air into a hot flow path. The cooling air may be air from the compressor of the gas turbine engine; however as overall pressure ratio increase to increase efficiency in gas turbine engine, the temperature of the air from the compressor also increases, thus reducing the cooling ability of the air. Embodiments disclosed herein include apparatuses and methods to increase the cooling ability of the air from the compressor.

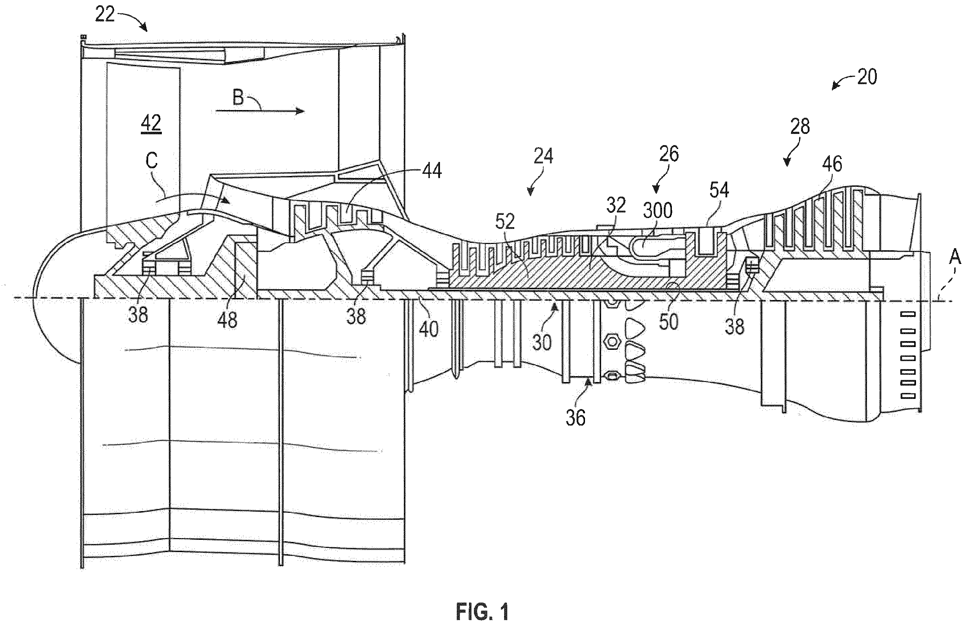

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmenter section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 300 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 300, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

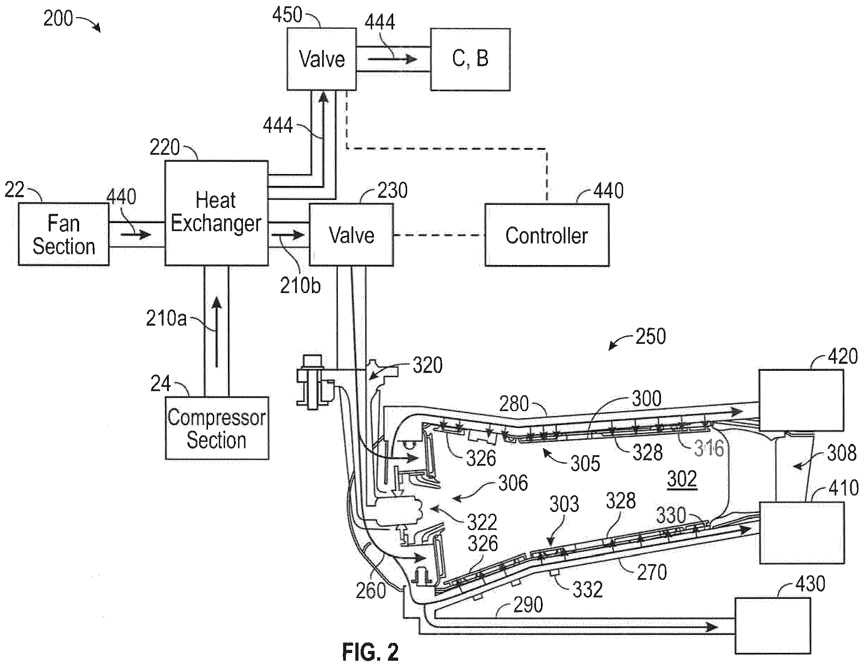

FIG. 2-6 are schematic illustration of different configuration of a combustor cooling system 200 configured to deliver a cooled compressor bleed air 210a to the combustor 300. As shown, a combustor 300 defines a combustion chamber 302. The combustor 300 includes an inlet 306 and an outlet 308 through which air may pass.

The combustor 300, as shown in FIGs. 2-6, includes multiple panels 326, 328 that are mounted on an interior surface of one or more shells 330 and are arranged parallel to the shells 330. The shells 330 can define circular or annular structures with the panels 326, 328 being mounted on a radially inward shell and a radially outward shell, as will be appreciated by those of skill in the art. The panels 326, 328 can be removably mounted to the shell 330 by one or more attachment mechanisms 332. In some embodiments, the attachment mechanism 332 may be integrally formed with a respective panel 326, 328, although other configurations are possible. In some embodiments, the attachment mechanism 332 may be a bolt or other structure that may extend from the respective panel 326, 328 through the interior surface to a receiving portion or aperture of the shell 330 such that the panel 326, 328 may be attached to the shell 330 and held in place. First panels 326 may be configured about the inlet 306 of the combustor 300 and may be referred to as forward panels. Second panels 328 may be positioned axially rearward and adjacent the first panels 326, and may be referred to as aft panels. A plurality of first panels 326 and second panels 328 may be attached and extend about an inner diameter of the combustor 300, and a separate plurality of first and second panels 326, 328 may be attached and extend about an outer diameter of the combustor 300, as known in the art.

Compressor bleed air 210a may be supplied to the combustor 300 through the combustor cooling system 200. The combustor cooling system 200 comprises a heat exchanger 220, a valve 230, and a plenum assembly 250. The heat exchanger 220 is fluidly connected to the compressor section 24. The heat exchanger 220 is configured to receive the compressor bleed air 210a and cool the compressor bleed air 210a, the heat exchanger 220 will expel cooled compressor bleed air 210b. The heat exchanger 220 is also fluidly connected to the fan section 22 and is configured to receive fan bleed air 440 from the fan section 22. The fan bleed air 440 may provide additional cooling for the heat exchanger 220. It understood that the embodiments disclosed herein are not limited to utilizing fan bleed air 440 to cool the heat exchanger 220 and bleed air from any engine section upstream of the high pressure compressor 52 (i.e. the final compression stage) may be utilized to cool the heat exchanger 220. The valve 230 is configured to regulate airflow from the heat exchanger 220 to the plenum assembly 250 by adjusting the valve 230. The valve 230 may fluidly connect the heat exchanger 220 and the combustor 300 as shown in FIGs. 2-6. Alternatively, the valve may fluidly connect the heat exchanger 220 and the compressor section 24. The valve 230 may be in electronic communication with a controller 440 configured to detect the temperature of the combustor 300 or exit air from the combustor outlet 308, determine a cooling requirement of the combustor 300, and adjust the valve 230 in response to the cooling requirement of the combustor 300. A secondary valve 450 may be fluidly connected to the heat exchanger 450. The secondary valve 450 may be actuated to divert warm air 444 from the heat exchanger 220 to exit the engine 20 through the core flow C and/or bypass flow path B (See FIG. 1). The secondary valve 450 may be in electronic communication with the controller 440 and the controller 440 may be configured to actuate the secondary valve 450. The controller 440 may actuate the secondary valve 450 in response to the cooling requirement of the combustor 300.

The controller 440 may include a processor and memory. For ease of illustration, the processor and memory are not shown in FIGs. 2-6. The processor can be any type or combination of computer processors, such as a microprocessor, microcontroller, digital signal processor, application specific integrated circuit, programmable logic device, and/or field programmable gate array. The memory can be a non-transitory computer readable storage medium tangibly embodied in or operably connected to the path determination system including executable instructions stored therein, for instance, as firmware.

The plenum assembly 250 is fluidly connected to the heat exchanger 220 and configured to receive cooled compressor bleed air 210b from the heat exchanger 220. The plenum assembly 250 is configured to distribute the cooled compressor bleed air 210b to one or more areas of the combustor 300. The plenum assembly 250 may include at least one of a frontal plenum 260, an inner plenum 270, an outer plenum 280, and a bypass plenum 290. The frontal plenum 260 provides cooled compressor bleed air 210b to the inlet 306 of the combustor 300. The inner plenum 270 provides cooled compressor bleed air 210b to a radially inward area 303 of the combustor 300. The outer plenum 280 provides cooled compressor bleed air 210b to a radially outward area 305 of the combustor 300. A plurality of passages 316 from the plenum assembly 250 to the combustion chamber 302 pass through the panels 326, 328 and shell 300 to enable cooled compressor bleed air 210b to flow into the combustion chamber 302 from the inward plenum 270 and/or the outward plenum 280. The panels 326, 328 and shell 300 may also include a plurality of holes and/or apertures to enable fluid, such as gases, to flow from areas external to the combustion chamber 302 into the combustion chamber 302.

As illustrated, the plenum assembly 250 may also be fluidly connected to one or more engine components 410, 420, 430 located downstream of the combustor 300. The plenum assembly 250 provides cooled compressor bleed air 210b to the one or more engine components 410, 420, 430. The inner plenum 270 may be fluidly connected to a first engine component 410 and provide cooled compressor bleed air 210b to the first engine component 410. The first engine component 410 may be at least one of an inner portion of a vane of the turbine section 28 and a rotor cavity. The outer plenum 280 may be fluidly connected to a second engine component 420 and provide cooled compressor bleed air 210b to the second engine component 420. The second engine component 420 may be an outer portion of a vane of the turbine section 28 or a blade outer air seal. The bypass plenum 290 may be fluidly connected to a third engine component 430 and provide cooled compressor bleed air 210b to the third engine component 430. The third engine component 430 may be at least one of a blade of the turbine section 28, the rotor system, and tangential onboard injector.

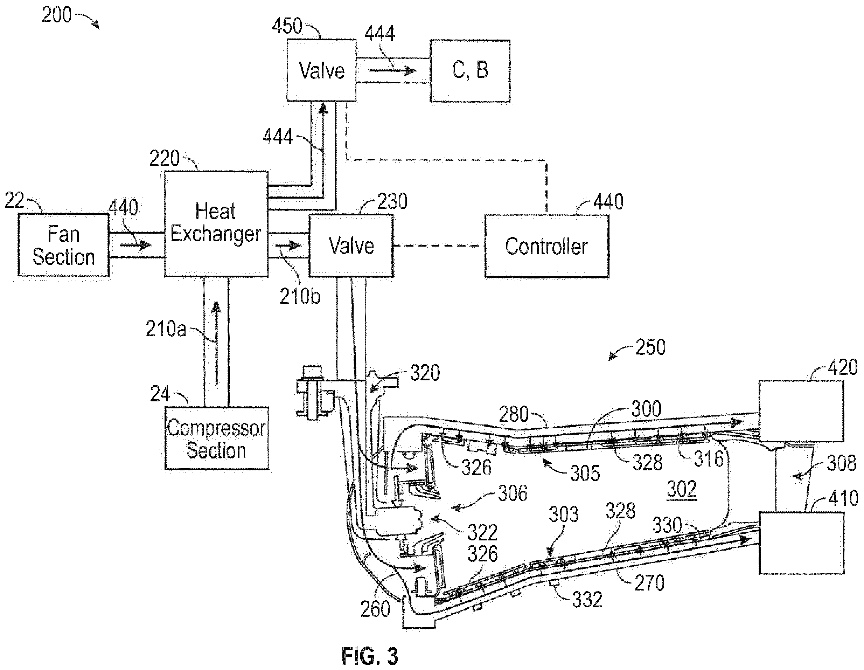

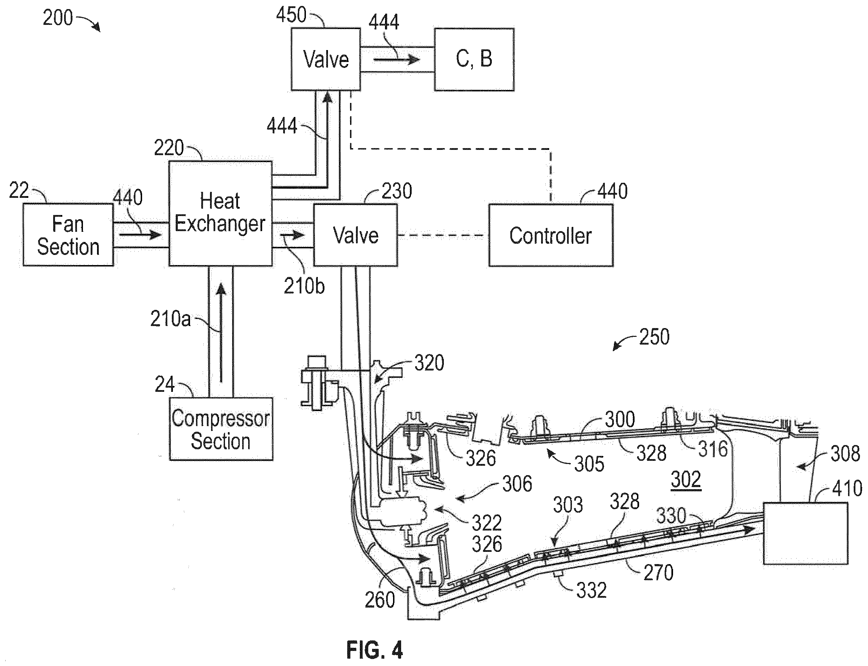

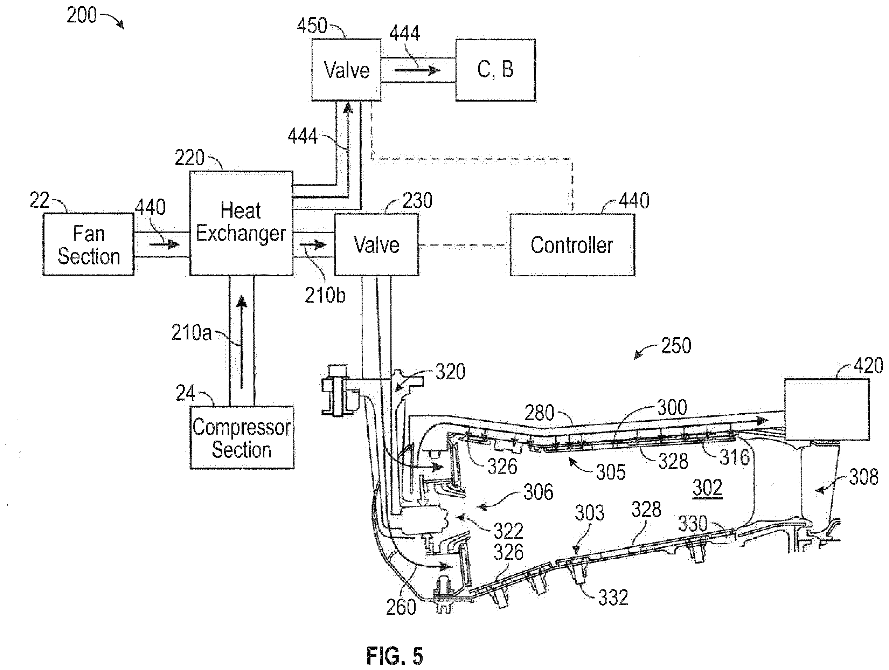

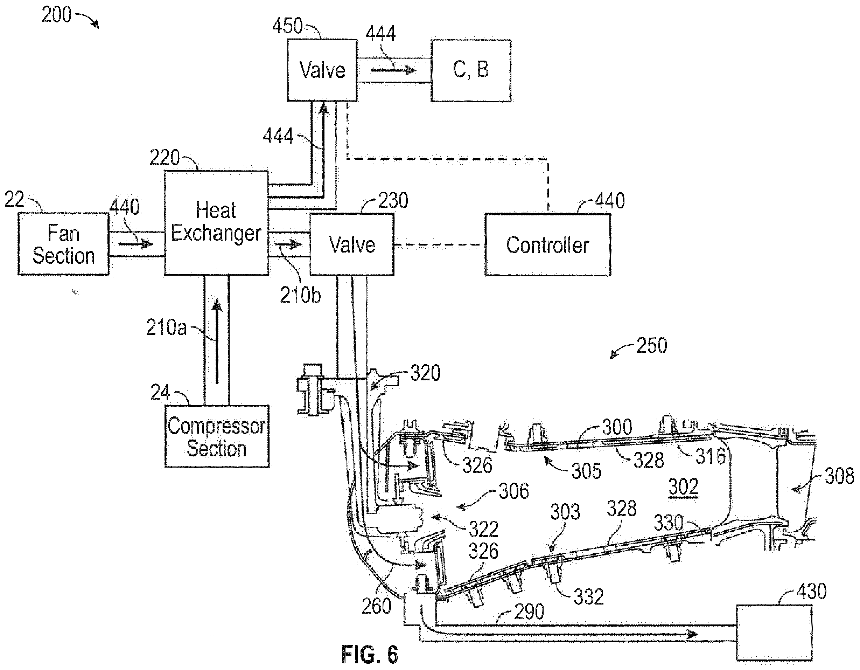

The plenum assembly 250 may include various combinations of the frontal plenum 260, the inner plenum 270, the outer plenum 280, and the bypass plenum 290. As shown in FIG. 2, the plenum assembly 250 may include the frontal plenum 260, the inner plenum 270, the outer plenum 280, and the bypass plenum 290. As shown in FIG. 3, the plenum assembly 250 may include the frontal plenum 260, the inner plenum 270, and the outer plenum 280. As shown in FIG. 4, the plenum assembly 250 may include the frontal plenum 260 and the inner plenum 270. As shown in FIG. 5, the plenum assembly 250 may include the frontal plenum 260 and the outer plenum 280. As shown in FIG. 6, the plenum assembly 250 may include the frontal plenum 260 and the bypass plenum 290.

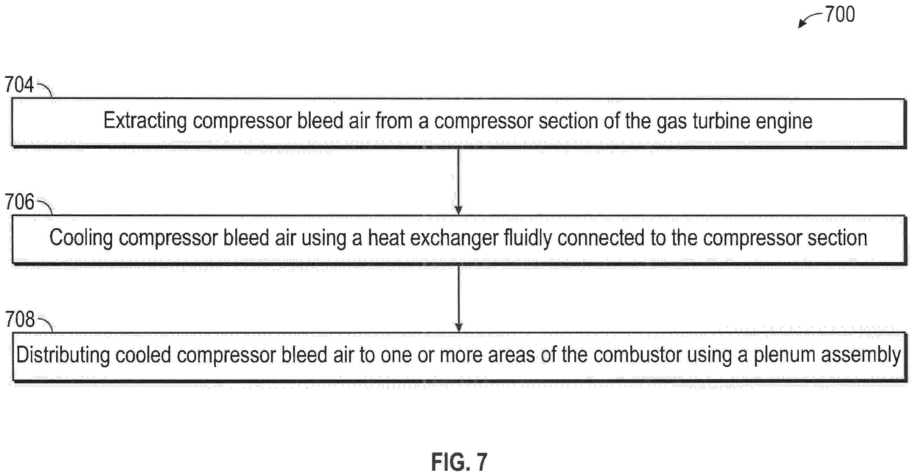

Referring now to FIG. 7 with continued reference to FIGs. 1-6. FIG. 7 is a flow chart illustrating a method 700 of cooling a combustor 300 of a gas turbine engine 20, according to an embodiment of the present disclosure. At block 704, compressor bleed air 210a is extracted from a compressor section 24 of the gas turbine engine 20. In other words, at block 704 the method comprises extracting compressor bleed air from a compressor section of the gas turbine engine. At block 706, the compressor bleed air 210a is cooled using a heat exchanger 220 fluidly connected to the compressor section 24. In other words, at block 706 the method comprises cooling compressor bleed air using a heat exchanger fluidly connected to the compressor section. At block 708, the cooled compressor bleed air 210b is distributed to one or more areas of the combustor 300 using a plenum assembly 250. In other words, at block 708 the method comprises distributing cooled compressor bleed air to one or more areas of the combustor using a plenum assembly. As discussed above, the one or more areas of the plenum assembly 250 may include an inlet 306 of the combustor 300, a radially inward area 303 of the combustor 300, and a radially outward area 305 of the combustor 300.

The method 700 may also include distributing cooled compressor bleed air 210b to one or more engine components 410, 420, 430 located downstream of the combustor 300, as discussed above. The method 700 may further include adjusting flow of cooled compressor bleed air 210b from the heat exchanger 220 to the combustor 300 using a valve 230. As described above, a controller 440 may be in electronic communication with the valve 230 and may control the operation of the valve. The controller 440 may detect a temperature of the combustor 300, determine a cooling requirement for the combustor 300 in response to the temperature of the combustor 300; and adjust flow of cooled compressor bleed air 210b from the heat exchanger 220 to the combustor 300 using a valve 230. The controller 440 may detect a temperature of the combustor 300 using either a temperature sensor (not-shown) and/or through calculations.

While the above description has described the flow process of FIG. 7 in a particular order, it should be appreciated that unless otherwise specifically required in the attached claims that the ordering of the steps may be varied.

Technical effects of embodiments of the present disclosure include cooling compressor bleed air with a heat exchanger and utilizing the cooled compressor bleed air to cool a combustor of a gas turbine engine.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A combustor cooling system (200) for a combustor (300) of a gas turbine engine (20), the combustor cooling system comprising:
a heat exchanger (220) fluidly connected to a compressor section (24) of the gas turbine engine, the heat exchanger being configured to receive compressor bleed air (210a) from the compressor section and cool the compressor bleed air; and
a plenum assembly (250) fluidly connected to the heat exchanger, the plenum assembly configured to receive cooled compressor bleed air (210b) from the heat exchanger and distribute the cooled compressor bleed air to one or more areas of the combustor.

2. The combustor cooling system of claim 1, wherein the plenum assembly is fluidly connected to the heat exchanger through a valve (230) configured to adjust the flow of cooled compressor bleed air from the heat exchanger to the combustor.

3. The combustor cooling system of claim 1 or 2, wherein the plenum assembly further comprises at least one of a frontal plenum (260) to provide cooled compressor bleed air to an inlet (306) of the combustor, an inner plenum (270) to provide cooled compressor bleed air to a radially inward area (303) of the combustor, an outer plenum (280) to provide cooled compressor bleed air to a radially outward area (305) of the combustor, and a bypass plenum (290) to provide cooled compressor air to an engine component (410, 420, 430) located downstream of the combustor.

4. The combustor cooling system of claim 1 or 2, wherein the plenum assembly further comprises a frontal plenum (260) to provide cooled compressor bleed air to an inlet (306) of the combustor, an inner plenum (270) to provide cooled compressor bleed air to a radially inward area (303) of the combustor, an outer plenum (280) to provide cooled compressor bleed air to a radially outward area (305) of the combustor, and a bypass plenum (290) to provide cooled compressor air to an engine component (410 ,420, 430) located downstream of the combustor.

5. The combustor cooling system of claim 1 or 2, wherein the plenum assembly further comprises a frontal plenum to provide cooled compressor bleed air to an inlet of the combustor; and/or
wherein the plenum assembly further comprises an inner plenum to provide cooled compressor bleed air to a radially inward area of the combustor and an outer plenum to provide cooled compressor bleed air to a radially outward area of the combustor.

6. The combustor cooling system of claim 1 or 2, wherein the plenum assembly further comprises an inner plenum to provide cooled compressor bleed air to a radially inward area of the combustor; and/or
wherein the plenum assembly further comprises an outer plenum to provide cooled compressor bleed air to a radially outward area of the combustor.

7. The combustor cooling system of claim 1 or 2, wherein the plenum assembly further comprises a bypass plenum to provide cooled compressor air to an engine component downstream of the combustor;
optionally wherein the plenum assembly further comprises an inner plenum to provide cooled compressor bleed air to a radially inward area of the combustor and/or wherein the plenum assembly further comprises an outer plenum to provide cooled compressor bleed air to a radially outward area of the combustor.

8. The combustor cooling system of any preceding claim, wherein the plenum assembly is fluidly connected to one or more engine components (410, 420, 430) located downstream of the combustor and the plenum assembly is configured to provide the cooled compressor bleed air to one or more engine components.

9. The combustor cooling system of claim 8, wherein the plenum assembly further comprises an inner plenum to provide cooled compressor bleed air to a radially inward area of the combustor, and wherein the inner plenum assembly provides cooled compressor bleed air to an inner vane of a turbine section (28) of the gas turbine engine; and/or
wherein the plenum assembly further comprises an outer plenum to provide cooled compressor bleed air to a radially outward area of the combustor, and wherein the outer plenum assembly provides cooled compressor bleed air to an outer vane of a turbine section (28) of the gas turbine engine or a blade outer air seal of the turbine section of the gas turbine engine.

10. The combustor cooling system of claim 8 or 9, wherein the plenum assembly further comprises a bypass plenum to provide cooled compressor bleed air to a blade of a turbine section (28) of the gas turbine engine.

11. A method (700) of cooling a combustor (300) of a gas turbine engine (20), the method comprising:
extracting (704) compressor bleed air (210a) from a compressor section (24) of the gas turbine engine;
cooling (706) compressor bleed air using a heat exchanger (220) fluidly connected to the compressor section; and
distributing (708) cooled compressor bleed air (210b) to one or more areas of the combustor using a plenum assembly (250).

12. The method of claim 11, further comprising:
adjusting flow of cooled compressor bleed air from the heat exchanger to the combustor using a valve (230).

13. The method of claim 11 or 12, further comprising:
detecting a temperature of the combustor;
determining a cooling requirement for the combustor in response to the temperature of the combustor; and
adjusting flow of cooled compressor bleed air from the heat exchanger to the combustor using a valve (230).

14. The method of claim 11, 12 or 13, wherein the one or more areas comprises at least one of an inlet (306) of the combustor, a radially inward area (303) of the combustor, and a radially outward area (305) of the combustor.

15. The method of any of claims 11 to 14, further comprising:
distributing cooled compressor bleed air to one or more engine components (410, 420, 430) located downstream of the combustor.
